(19) Europäisches Patentamt
European Patent Office
Office européen des brevets

(11) **EP 3 185 480 B1**

(12) **EUROPEAN PATENT SPECIFICATION**

(45) Date of publication and mention
of the grant of the patent:
**05.02.2020 Bulletin 2020/06**

(51) Int Cl.:
***H04L 12/26*** *(2006.01)*    ***H04L 29/06*** *(2006.01)*
***H04L 12/841*** *(2013.01)*

(21) Application number: **16203461.5**

(22) Date of filing: **12.12.2016**

(54) **METHOD AND APPARATUS FOR PROCESSING NETWORK JITTER, AND TERMINAL DEVICE**

VERFAHREN UND VORRICHTUNG ZUR VERARBEITUNG VON NETZWERK-JITTER UND ENDGERÄTEVORRICHTUNG

PROCÉDÉ ET APPAREIL DE TRAITEMENT DE GIGUE DE RÉSEAU ET DISPOSITIF TERMINAL

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **21.12.2015 CN 201510967352**

(43) Date of publication of application:
**28.06.2017 Bulletin 2017/26**

(73) Proprietor: **Xiaomi Inc.**
**Beijing 100085 (CN)**

(72) Inventors:
• **LI, Jing**
**Beijing, Beijing 100085 (CN)**
• **WANG, Linzhang**
**Beijing, Beijing 100085 (CN)**
• **LIANG, Shangui**
**Beijing, Beijing 100085 (CN)**
• **WU, Zijing**
**Beijing, Beijing 100085 (CN)**

(74) Representative: **dompatent von Kreisler Selting Werner -**
**Partnerschaft von Patent- und Rechtsanwälten mbB**
**Deichmannhaus am Dom**
**Bahnhofsvorplatz 1**
**50667 Köln (DE)**

(56) References cited:
WO-A1-01/33787        WO-A1-2014/100331
WO-A1-2015/160617     CN-A- 103 685 070
US-A1- 2009 003 369

## Description

## TECHNICAL FIELD

The present disclosure relates to the technical field of smart terminal device, and more particularly, to a method and an apparatus for processing network jitter, and a terminal device.

## BACKGROUND

With the increasing of network bandwidth and the popularization of mobile internet, a real-time speech communication application utilizing the internet in a mobile phone is developed quickly. Compared with a wired network, a wireless network has significant influences on the quality of such real-time speech communication service like Voice over Internet Protocol (referred to as VoIP) on packet loss rate, network delay, network jitter and other aspects.

In VoIP speech communication, a sending end usually adopts a speech encoding algorithm with a fixed frame rate and sends data at uniform time intervals. In this case, the factor that has the greatest impact on the speech quality at a receiving end is the time interval jitter of the receiving end for receiving data, rather than the end-to-end transmission delay. However, the related art lacks a method for solving network jitter according to the time interval jitter of the receiving end for receiving data.

WO 2014/100331 describes an apparatus and a method for controlling a jitter buffer wherein an inter-talkspurt delay jitter is estimated for estimating an offset value of the delay of a first frame in the current talkspurt with respect to the delay of a latest anchor frame in a previous talkspurt. Thereby the length of the jitter buffer is adjusted based on a long term length of the jitter buffer for each frame and the offset value.

WO 01/33787 describes a method and system for managing jitter buffering that accurately measures network latency and the variation in latency by time-stamping incoming packets. A traffic analyzer maintains a sliding window of statistics generated from a recent set of packets. A jitter manager monitors packets, receives and makes adjustments based on information received from the traffic analyzer, and manages any connected jitter buffers.

WO 2015/160617 discloses a jitter buffer control based on monitoring of delayed jitter and conversational dynamics. Thereby audio packets are analyzed to determine network jitter dynamics data, whereby the network jitter dynamics data may provide an indication of jitter in the network that relays the audio data packets. A jitter buffer size may be controlled according to the network jitter dynamics data.

CN 103685070 describes a method for adjusting the jitter buffer in order to avoid disturbance of voice-over-IP transmission.

US 2009/0003369 describes a receiver having control logic means for determining a target packet level of a jitter buffer adapted to receive packets with digitized signal samples, wherein the packets are subject to delay jitter. Therein, the jitter buffer is made adaptive to current network conditions, i.e. the nature and magnitude of the jitter observed by the receiver, by collecting statistical measures that describe these conditions.

## SUMMARY

The present disclosure provides a method, an apparatus and a computer program which are adapted for solving network jitter according to the time interval jitter of the receiving end for receiving data, as defined in the appended claims.

According to the first embodiments of the present disclosure, there is provided a method for processing network jitter, including:

receiving multiple speech data packets and recording a receiving moment of each speech data packet;
calculating a time interval between receiving every two adjacent speech data packets in the multiple speech data packets according to the receiving moment;
performing a statistics on a probability distribution of the time intervals according to preset intervals to which respective time intervals belong;
calculating a target size of a buffer zone according to the probability distribution and an allowable jitter probability; and
adjusting the buffer zone according to the target size of the buffer zone to solve network jitter.

Further, the $n^{th}$ time interval $J_n = R_n - R_{n-1}$, wherein $R_n$ represents the receiving moment of the $n^{th}$ speech data packet, $R_{n-1}$ represents the receiving moment of the $(n - 1)^{th}$ speech data packet, $1 \le n \le (N - 1)$, and $N$ represents a total number of the speech data packets;

a number of the preset intervals is more than one, and the $i^{th}$ preset interval is $(\dfrac{(2i-1)T}{K}, \dfrac{(2i+1)T}{K}]$, wherein $T$ is a fixed time interval of sending the speech data packets by a sending end, and $K$ is a positive integer; and

the performing the statistics on the probability distribution of the time intervals according to the preset intervals to which respective time intervals belong includes:

performing a statistics on a number $N_i, i \ge 0$ of time intervals that fall within each preset interval respectively among all the time intervals, wherein $i$ represents an identification number of the preset interval, and $N_i \ge 0$; and

calculating a probability $p_i = \dfrac{N_i}{N}$ of the time interval that falls within each preset interval according to each $N_i$ and the total number $N$ of the speech data packets.

The technical solution may include the following advantageous effects: the probability of the time intervals falling within each preset interval is derived by performing a statistics on the number of the time intervals falling within each preset interval respectively among all the time intervals, and using the ratio of the number of the time intervals in each preset interval to the total number of the speech data packets as the probability of the time intervals falling within the preset interval, so that the probability distribution of the time intervals can be acquired.

In a implementation manner of the first aspect, when $N \geq N_{max}$, for any $n$, if $n \geq N_{max}$, then 1 is subtracted from the number of the time intervals corresponding to the preset interval to which the $(n - N_{max} + 1)^{th}$ time interval belongs, wherein $N_{max}$ is a threshold value of the total number of the speech data packets.

The technical solution may include the following advantageous effects: by removing one oldest time interval every time when a new time interval is added, the total number of the time intervals distributed in each preset interval is ensured to be unchanged with the increasing of the speech data packets received by the receiving end.

According to an implementation manner the calculating the target size of the buffer zone according to the probability distribution and the allowable jitter probability includes:

calculating $m$ that satisfies a condition $\sum_{i=0}^{m} p_i < P < \sum_{i=0}^{m+1} p_i$ , wherein P represents a known allowable jitter probability; and
using a sum of sizes of the preset intervals continuously from the $0^{th}$ preset interval to the $m^{th}$ preset interval in the multiple preset intervals as the target size of the buffer zone.

According to an implementation manner in a third probable implementation manner of the first aspect, the adjusting the buffer zone according to the target size of the buffer zone to solve network jitter includes:

if a current size of the buffer zone is smaller than the target size of the buffer zone, and an effective length of the buffer zone is 0, generating data in the buffer zone to perform frame interpolation; and
if the current size of the buffer zone is greater than the target size of the buffer zone, deleting non-speech data from the buffer zone, so that a difference between the current size of the buffer zone and the target size of the buffer zone is within a preset range.

The technical solution may include the following advantageous effects: by calculating the target size of the buffer zone according to the probability distribution of the time interval and the allowable jitter probability, and adjusting the current size of the buffer zone according to the target size of the buffer zone, the size of the buffer zone is dynamically adjusted with the network jitter, thereby solving the network jitter.

According to an implementation manner, after the receiving the multiple speech data packets and recording the receiving moment of each speech data packet, the method further includes:

decoding each speech data packet in the multiple speech data packets to acquire speech data or non-speech data, and storing the speech data or the non-speech data into the buffer zone.

The technical solution may include the following advantageous effects: by adding one buffer zone between a decoder and a speech playing module of the receiving end, an RTP message receiving module of the receiving end transmits the received speech data packet (in particular, an RTP message) to the decoder, then the decoder decodes the RTP message to acquire speech data or non-speech data, and stores the speech data or non-speech data into the buffer zone, so as to process the network jitter through adjusting the buffer zone dynamically.

According to embodiments of the present disclosure, there is provided an apparatus for processing network jitter, including:

a receiving and recording module configured to receive multiple speech data packets and record a receiving moment of each speech data packet;
a calculation module configured to calculate a time interval between receiving every two adjacent speech data packets in the multiple speech data packets according to the receiving moment;
a statistical module configured to perform a statistics on a probability distribution of the time intervals according to preset intervals to which respective time intervals belong;
the calculation module being further configured to calculate a target size of a buffer zone according to the probability distribution and an allowable jitter probability; and
an adjustment module configured to adjust the buffer zone according to the target size of the buffer zone to solve network jitter.

Further, the $n^{th}$ time interval $J_n = R_n - R_{n-1}$, $R_n$ represents the receiving moment of the $n^{th}$ speech data packet, $R_{n-1}$ represents the receiving moment of the $(n-1)^{th}$ speech data packet, $1 \leq n \leq (N-1)$, and $N$ represents a total number of the speech data packets;
a number of the preset intervals is more than one, and the $i^{th}$ preset interval is $(\dfrac{(2i-1)T}{K}, \dfrac{(2i+1)T}{K}]$, wherein $T$ is a fixed time interval of sending the speech data packets by a sending end, and $K$ is a positive integer; and
the statistical module includes:

a first statistical submodule configured to perform a statistics on a number $N_i$, $i \geq 0$ of time intervals that fall within each preset interval respectively among all the time intervals, wherein $i$ represents an identification number of the preset interval, and $N_i \geq 0$ ; and

a first calculation submodule configured to calculate a probability $p_i = \dfrac{N_i}{N}$ of the time interval that falls within each preset interval according to each $N_i$ and the total number $N$ of the speech data packets.

The technical solution may include the following advantageous effects: the probability of the time intervals falling within each preset interval is derived by performing a statistics on the number of the time intervals that fall within each preset interval respectively among all the time intervals, and using the ratio of the number of the time intervals in each preset interval to the total number of the speech data packets as the probability of the time intervals falling within the preset interval, so that the probability distribution of the time intervals can be acquired.

In an implementation manner, the statistical module further includes:
a second statistical submodule configured to, when $N \geq N_{\max}$ , for any $n$, if $n \geq N_{\max}$, subtract 1 from the number of the time intervals corresponding to the preset interval to which the $(n \text{-} N_{\max} + 1)^{\text{th}}$ time interval belongs, wherein $N_{\max}$ is a threshold value of the total number of the speech data packets.

The technical solution may include the following advantageous effects: by removing one oldest time interval every time when a new time interval is added, the total number of the time intervals distributed in each preset interval is ensured to be unchanged with the increasing of the speech data packets received by the receiving end.

According to an implementation manner, in a second probable implementation manner of the second aspect, the calculation module includes:

a second calculation submodule configured to calculate $m$ that satisfies a condition

$$\sum_{i=0}^{m} p_i < P < \sum_{i=0}^{m+1} p_i ,$$

wherein $P$ represents a known allowable jitter probability; and

a third calculation submodule configured to calculate a sum of sizes of preset intervals continuously from the $0^{\text{th}}$ preset interval to the $m^{\text{th}}$ preset interval in the multiple preset intervals, the sum being the target size of the buffer zone.

According to an implementation manner, the adjustment module includes:

a first adjustment submodule configured to, if a current size of the buffer zone is smaller than the target size of the buffer zone, and an effective length of the buffer zone is 0, generate data in the buffer zone to perform frame interpolation; and
a second adjustment submodule configured to, if the current size of the buffer zone is greater than the target size of the buffer zone, delete non-speech data in the buffer zone, so that a difference between the current size of the buffer zone and the target size of the buffer zone is within a preset range.

The technical solution may include the following advantageous effects: by calculating the target size of the buffer zone according to the probability distribution of the time interval and the allowable jitter probability, and adjusting the current size of the buffer zone according to the target size of the buffer zone, the size of the buffer zone is dynamically adjusted with the network jitter, thereby solving the network jitter.

According to an implementation manner, the apparatus further includes: a decoding module configured to, after the receiving and recording module receives the multiple speech data packets and records the receiving moment of each speech data packet, decode each speech data packet in the multiple speech data packets to acquire speech data or non-speech data, and store the speech data or the non-speech data into the buffer zone.

The technical solution may include the following advantageous effects: by adding one buffer zone between a decoder and a speech playing module of the receiving end, an RTP message receiving module of the receiving end transmits the received speech data packet (in particular, an RTP message) to the decoder, then the decoder decodes the RTP message to acquire speech data or non-speech data, and stores the speech data or non-speech data into the buffer zone, so as to process the network jitter through adjusting the buffer zone dynamically.

The present invention also provides a computer program, which when executing on a processor of a terminal device, performs the above methods.

It is to be understood that both the foregoing general description and the following detailed description are exemplary and explanatory only and are not restrictive of the invention.

## BRIEF DESCRIPTION OF THE DRAWINGS

The accompanying drawings, which are incorporated in and constitute a part of this specification, illustrate embodiments consistent with the invention and, together with the description, serve to explain the principles of the invention.

Fig. 1A is a flow chart showing a first embodiment of a method for processing network jitter, according to an exemplary embodiment;

Fig. 1B is a schematic diagram of a receiving end in the embodiment as shown in Fig. 1A;

Fig. 2 is a flow chart showing a second embodiment of a method for processing network jitter, according to an exemplary embodiment;

Fig. 3 is a flow chart showing a third embodiment of a method for processing network jitter, according to an exemplary embodiment;

Fig. 4 is a flow chart showing a fourth embodiment of a method for processing network jitter, according to an exemplary embodiment;

Fig. 5 is a flow chart showing a fifth embodiment of a method for processing network jitter, according to an exemplary embodiment;

Fig. 6 is a block diagram showing a first embodiment of an apparatus for processing network jitter, according to an exemplary embodiment;

Fig. 7 is a block diagram showing a second embodiment of an apparatus for processing network jitter, according to an exemplary embodiment;

Fig. 8 is a block diagram showing a terminal device, according to an exemplary embodiment; and

Fig. 9 is a block diagram showing another terminal device, according to an exemplary embodiment.

## DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the invention. Instead, they are merely examples of devices and methods consistent with some aspects related to the invention as recited in the appended claims.

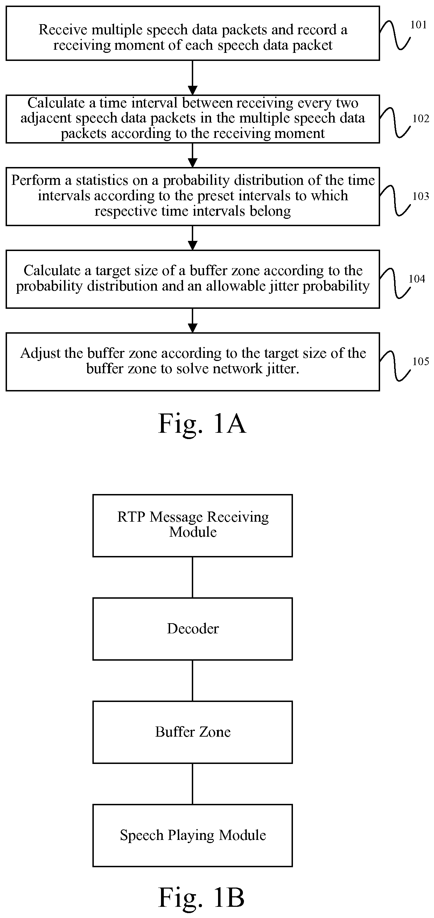

Fig. 1A is a flow chart showing a first embodiment of a method for processing network jitter, according to an exemplary embodiment. The method may be performed by an apparatus for processing network jitter, and the apparatus for processing network jitter may be integrated in a terminal device. As shown in Fig. 1A, the method includes the following steps.

In step 101, multiple speech data packets are received and a receiving moment of each speech data packet is recorded.

In the embodiment, two terminal devices perform speech communication through VoIP, and the protocol used by the two terminal devices during speech communication is a Real-time Transport Protocol (referred to as RTP); when a user at a receiving end listens to the speech of a user at a sending end, the sending end sends multiple RTP messages to the receiving end, and each RTP message includes speech data; and then the receiving end receives the multiple RTP messages and records a receiving moment of each RTP message.

In step 102, a time interval between receiving every two adjacent speech data packets in the multiple speech data packets is calculated according to the receiving moment.

The $n^{th}$ time interval $J_n = R_n - R_{n-1}$, wherein $R_n$ represents the receiving moment of the $n^{th}$ speech data packet, $R_{n-1}$ represents the receiving moment of the $(n-1)^{th}$ speech data packet, $1 \leq n \leq (N-1)$, and $N$ represents a total number of the speech data packets.

The time interval between every two adjacent speech data packets is calculated out according to the receiving moment of each RTP message, for example, the receiving moment of the $(n-1)^h$ speech data packet is $R_{n-1}$, the receiving moment of the $n^{th}$ speech data packet is $R_n$, $J_n = R_n - R_{n-1}$ represents the $n^{th}$ time interval, the number of all the RTP messages is $N$, and $1 \leq (N-1)$.

In step 103, a statistics on a probability distribution of the time intervals is performed according to the preset intervals to which respective time intervals belong.

In the embodiment, there are multiple preset intervals, and the $i^{th}$ preset interval is $(\dfrac{(2i-1)T}{K}, \dfrac{(2i+1)T}{K}]$, wherein $T$ is a fixed time interval of sending the speech data packets by a sending end, $K$ is a positive integer, and $i \geq 0$; a statistics on the number of time intervals that fall within each preset interval respectively among all the time intervals is performed, i.e., for each preset interval $(\dfrac{(2i-1)T}{K}, \dfrac{(2i+1)T}{K}]$, a statistics on the number $N_i$ of the time intervals that fall within this preset interval among all the time intervals is performed; because $J_n$ changes with $n$, the time interval $J$ of receiving two adjacent speech data packets by the receiving end is a random variable, a ratio of the number $N_i$ of the time intervals corresponding to the preset interval to the total number $N$ of the speech data packets is namely the probability $p_i$ of the random variable $J$ that falls within the preset interval, and the probability distribution of the random variable $J$ can be acquired according to the probability $p_i$, $i \geq 0$ of the random variable $J$ that falls within each preset interval. Preferably, $K=8$, wherein the larger the K is, the more detailed the statistical intervals are divided, and the more accurate the probability distribution acquired by calculation is. However, when the packet number on which the statistics is performed is not enough, an overlarge K value will make data at some position in a probability distribution image too small, which results in data distortion.

In step 104, a target size of a buffer zone is calculated according to the probability distribution and an allowable jitter probability.

In the embodiment, the allowable jitter probability represents a probability of overcoming the network jitter by the buffer zone. The probability sum $\sum_{i=0}^{m} p_i$ of the random variable $J$ falling within the top $(m+1)^{th}$ preset intervals and the probability sum $\sum_{i=0}^{m+1} p_i$ thereof falling within the top $(m+2)^{th}$ preset intervals are accumulated; if the allowable jitter probability $P$ satisfies the condition $\sum_{i=0}^{m} p_i < P < \sum_{i=0}^{m+1} p_i$, then a sum of sizes of the preset intervals continuously from the $0^{th}$ preset interval to the $m^{th}$ preset interval is the target size of the buffer zone.

In step 105, the buffer zone is adjusted according to the target size of the buffer zone to solve network jitter.

With reference to Fig. 1B, a buffer zone is added between a decoder and a speech playing module of the receiving end, an RTP message receiving module of the receiving end transmits the received speech data packet (in particular, an RTP message) to the decoder, then the decoder decodes the RTP message to acquire speech data or non-speech data, and stores the speech data or non-speech data into the buffer zone. Preferably, a length of the speech data or non-speech data acquired by decoding one RTP message is L, a total size of the buffer zone is K*L, i.e., the buffer zone is divided into K parts, the length of each part is L, and the numbers of all the parts are 0,1,2, ..., K-1 in sequence. The speech playing module regularly reads data from the buffer zone to play it. It is provided that the speech playing module reads data from the part with a number of $P_{read}$ in the buffer zone to play, the decoder writes the decoded and outputted data into the part with a number of $P_{write}$, $P_{write}$ - $P_{read}$ represents the effective data length of the buffer zone, and also represents a delay generated in the buffer zone.

Because the size of the buffer zone is closely related to the ability of the buffer zone for overcoming the network jitter, the buffer zone is adjusted according to the target size of the buffer zone so as to solve the network jitter.

In the embodiment, because the probability distribution of the time intervals of receiving the speech data packets by a receiving end changes with the network jitter, while the time interval of receiving the speech data packets by the receiving end is a random variable, the target size of the buffer zone is calculated through the probability distribution of the time interval and the allowable jitter probability in the embodiment; therefore, the target size of the buffer zone changes with the network jitter, and adjusting the buffer zone according to the target size of the buffer zone enables the size of the buffer zone to change with the network jitter; and since the size of the buffer zone is closely related to the ability of the buffer zone for overcoming the network jitter, the network jitter can be solved by adjusting the buffer zone according to the target size of the buffer zone.

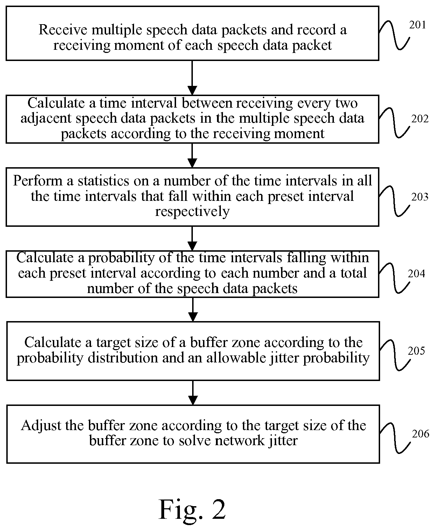

Fig. 2 is a flow chart showing a second embodiment of a method for processing network jitter, according to an exemplary embodiment. As shown in Fig. 2, the method may include the following steps.

In step 201, multiple speech data packets are received and a receiving moment of each speech data packet is recorded.

In step 202, a time interval between receiving every two adjacent speech data packets in the multiple speech data packets is calculated according to the receiving moment.

In step 203, a statistics on the number $N_i$, $i \geq 0$ of the time intervals that fall within each preset interval respectively in all the time intervals is performed, wherein $i$ represents an identification number of the preset interval, and $N_i \geq 0$.

In the embodiment, there are multiple preset intervals, and the $i^{th}$ preset interval is $\left(\dfrac{(2i-1)T}{K}, \dfrac{(2i+1)T}{K}\right]$, $i \geq 0$, the number of all the RTP messages is $N$, then all the time intervals are $J_1$, $J_2$......$J_{N-1}$, a statistics on the number of the time intervals in $J_1, J_2......J_{N-1}$ that fall within each preset interval is performed, and the number of the time intervals in $J_1, J_2......J_{N-1}$ that fall within the $i^{th}$ preset interval is represented by $N_i$; for example, only $J_2$, $J_3$ and $J_{10}$ in $J_1, J_2......J_{N-1}$ satisfy conditions 

$$\dfrac{(2i-1)T}{K} < J_2 \leq \dfrac{(2i+1)T}{K},$$

$$\dfrac{(2i-1)T}{K} < J_3 \leq \dfrac{(2i+1)T}{K} \quad \text{and}$$

$$\dfrac{(2i-1)T}{K} < J_{10} \leq \dfrac{(2i+1)T}{K},$$ i.e., three values in $J_1, J_2.....J_{N-1}$ fall within the $i^{th}$ preset interval, then $N_i = 3$, and which is the same for other preset intervals.

In step 204, a probability $p_i = \dfrac{N_i}{N}$ of the time intervals falling within each preset interval is calculated according to each $N_i$ and the total number $N$ of the speech data packets.

The statistical values corresponding to each preset interval can be acquired according to step 203, for example, the $i^{th}$ preset interval is corresponding to $N_i$ statistical values, then $p_i = \dfrac{N_i}{N}$ is the probability of the random variable $J$ falling within the $i^{th}$ preset interval; in this way, the probability of the random variable $J$ falling within each preset interval can be calculated out.

In step 205, a target size of a buffer zone is calculated according to the probability distribution and an allowable jitter probability.

In step 206, the buffer zone is adjusted according to the target size of the buffer zone to solve network jitter.

In the embodiment, the probability of the time intervals falling within each preset interval is derived by performing a statistics on the number of the time intervals in all the time intervals that fall within each preset interval respectively, and using the ratio of the number of the time intervals in each preset interval to the total number of the speech data packets as the probability of the time intervals falling within the preset interval, so that the probability distribution of the time intervals can be acquired.

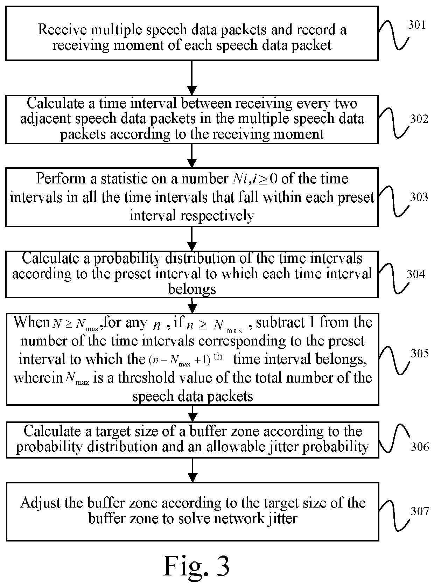

Fig. 3 is a flow chart showing a third embodiment of a method for processing network jitter, according to an exemplary embodiment. As shown in Fig. 3, the method may include the following steps.

In step 301, multiple speech data packets are received and a receiving moment of each speech data packet is recorded.

In step 302, a time interval between receiving every two adjacent speech data packets in the multiple speech data packets is calculated according to the receiving moment.

In step 303, a statistics on the number $N_i$, $i \geq 0$ of the time intervals in all the time intervals that fall within each preset interval respectively is performed, wherein $i$ represents an identification number of the preset interval, and $N_i \geq 0$.

In step 304, a probability $p_i = \dfrac{N_i}{N}$ of the time intervals falling within each preset interval is calculated according to each $N_i$ and the total number $N$ of the speech data packets.

In step 305, when $N \geq N_{max}$, for any $n$, if $n \geq N_{max}$, then 1 is subtracted from the number of the time intervals corresponding to the preset interval to which the $(n - N_{max} + 1)^{th}$ time interval belongs, wherein $N_{max}$ is a threshold value of the total number of the speech data packets.

It is rationally assumed that the receiving end in the embodiment has received 1000 speech data packets currently, the numbers of the 1000 speech data packets are 0,1,2..., 999 in sequence, and the 1000 speech data packets are corresponding to 999 time intervals, i.e., $J_1, J_2 \ldots \ldots J_{999}$, and the threshold value of the total number of the speech data packets that can be received by the receiving end is 1000; when the receiving end receives the speech data packet having a number of 1000, $J_{1000}$ is calculated. It is provided that $J_{1000}$ belongs to the 10$^{th}$ preset interval, then the statistical value corresponding to the 10$^{th}$ preset interval is added with 1, and meanwhile, 1 is subtracted from the statistical value corresponding to the preset interval to which $J_1$ belongs; similarly, when the receiving end receives the speech data packet having a number of 1001, $J_{1001}$ is calculated. It is provided that $J_{1001}$ belongs to the 8$^{th}$ preset interval, then the statistical value corresponding to the 8$^{th}$ preset interval is added with 1, and meanwhile, 1 is subtracted from the statistical value corresponding to the preset interval to which $J_2$ belongs. That is, every time when a new time interval is added, one oldest time interval is removed, so as to ensure that the total number of the time intervals distributed in each preset interval is unchanged with the increasing of the speech data packets received by the receiving end.

In step 306, a target size of a buffer zone is calculated according to the probability distribution and an allowable jitter probability.

In step 307, the buffer zone is adjusted according to the target size of the buffer zone to solve network jitter.

In the embodiment, by removing one oldest time interval every time when a new time interval is added, the total number of the time intervals distributed in each preset interval is ensured to be unchanged with the increasing of the speech data packets received by the receiving end.

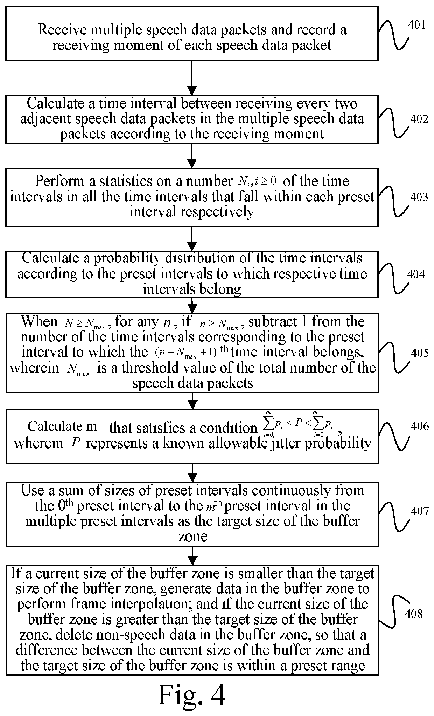

Fig. 4 is a flow chart showing a fourth embodiment of a method for processing network jitter, according to an exemplary embodiment. As shown in Fig. 4, the method may include the following steps.

In step 401, multiple speech data packets are received and the receiving moment of each speech data packet is recorded.

In step 402, the time interval between receiving every two adjacent speech data packets in the multiple speech data packets is calculated according to the receiving moment.

In step 403, a statistics on a number $N_i, i \geq 0$ of the time intervals in all the time intervals that fall within each preset interval respectively is performed, wherein $i$ represents an identification number of the preset interval, and $N_i$, 0.

In step 404, a probability $p_i = \dfrac{N_i}{N}$ of the time intervals falling within each preset interval is calculated according to each $N_i$ and the total number $N$ of the speech data packets.

In step 405, when $N \geq N_{max}$, for any $n$, if $n \geq N_{max}$, then 1 is subtracted from the number of the time intervals corresponding to the preset interval to which the $(n - N_{max} + 1)^{th}$ time interval belongs, wherein $N_{max}$ is a threshold value of the total number of the speech data packets.

In step 406, $m$ that satisfies a condition

$$\sum_{i=0}^{m} p_i < P < \sum_{i=0}^{m+1} p_i$$ is calculated, wherein P represents a known allowable jitter probability.

The allowable jitter probability represents the probability of overcoming the net-work jitter by the buffer zone. The probability sum $\sum_{i=0}^{m} p_i$ of the random variable $J$ falling within the top $(m+1)^{th}$ preset intervals and the probability sum $\sum_{i=0}^{m+1} p_i$ thereof falling within the top $(m+2)^{th}$ preset intervals are accumulated; and the known value P of the allowable jitter probability is preset, so as to calculate $m$ that satisfies the condition $\sum_{i=0}^{m} p_i < P < \sum_{i=0}^{m+1} p_i$.

In step 407, a sum of sizes of the preset intervals continuously from the $0^{th}$ preset interval to the $m^{th}$ preset interval in the multiple preset intervals is used as the target size of the buffer zone.

In step 408, if a current size of the buffer zone is smaller than the target size of the buffer zone, then data is generated in the buffer zone to perform frame interpolation; and if the current size of the buffer zone is greater than the target size of the buffer zone, then non-speech data in the buffer zone is deleted, so that a difference between the current size of the buffer zone and the target size of the buffer zone is within a preset range.

A specific adjustment method for adjusting the buffer zone according to the target size of the buffer zone to solve the network jitter is as follows: if the current size of the buffer zone is smaller than the target size of the buffer zone, generating data in the buffer zone to perform frame interpolation, wherein the method for frame interpolation particularly includes: for speech data, repeating based on a pitch period so as to ensure steady speech; and for non-speech data, generating and smoothing noises according to the energy estimation of background noises; and if the current size of the buffer zone is greater than the target size of the buffer zone, then deleting the non-speech data in the buffer zone, so as to decrease the current size of the buffer zone until the difference between the current size of the buffer zone and the target size of the buffer zone is within a preset range, then stopping deleting the non-speech data.

In the embodiment, the size of the buffer zone is dynamically adjusted with the network jitter by calculating the target size of the buffer zone according to the probability distribution of the time interval and the allowable jitter probability, and adjusting the current size of the buffer zone according to the target size of the buffer zone, so that the network jitter is solved.

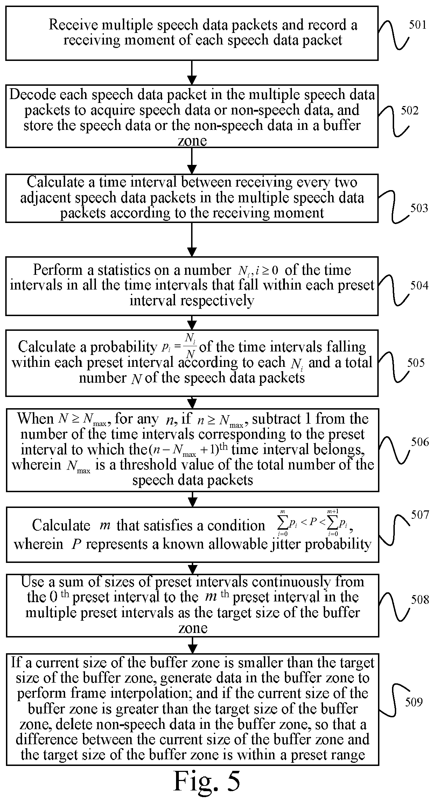

Fig. 5 is a flow chart showing a fifth embodiment of a method for processing network jitter, according to an exemplary embodiment. As shown in Fig. 5, the method may include the following steps.

In step 501, multiple speech data packets are received and a receiving moment of each speech data packet is recorded.

In step 502, each speech data packet in the multiple speech data packets is decoded to acquire speech data or non-speech data, and the speech data or the non-speech data is stored in a buffer zone.

As shown in Fig. 1B specifically, the method of step 502 is consistent with the descriptions in the first embodiment regarding Fig. 1B, and will not be elaborated herein.

In step 503, a time interval between receiving every two adjacent speech data packets in the multiple speech data packets is calculated according to the receiving moment.

In step 504, a statistics on a number $N_i$, $i \geq 0$ of the time intervals in all the time intervals that fall within each preset interval respectively is performed, wherein $i$ represents an identification number of the preset interval, and $N_i \geq 0$.

In step 505, a probability $p_i = \dfrac{N_i}{N}$ of the time intervals falling within each preset interval is calculated according to each $N_i$ and the total number $N$ of the speech data packets.

In step 506, when $N \geq N_{max}$, for any $n$, if $n \geq N_{max}$, then 1 is subtracted from the number of the time intervals corresponding to the preset interval to which the $(n - N_{max} + 1)^{th}$ time interval belongs, wherein $N_{max}$ is a threshold value of the total number of the speech data packets.

In step 507, $m$ that satisfies a condition $\sum_{i=0}^{m} p_i < P < \sum_{i=0}^{m+1} p_i$ is calculated, wherein P represents a known allowable jitter probability.

The allowable jitter probability represents the probability of overcoming the net-work jitter by the buffer zone. The probability sum $\sum_{i=0}^{m} p_i$ of the random variable $J$ falling within the top $(m+1)^{th}$ preset intervals and the probability sum $\sum_{i=0}^{m+1} p_i$ thereof falling within the top $(m+2)^{th}$ preset intervals are accumulated; and the known value P of the allowable jitter probability is preset, so as to calculate $m$ that satisfies the condition $\sum_{i=0}^{m} p_i < P < \sum_{i=0}^{m+1} p_i$.

In step 508, a sum of sizes of the preset intervals continuously from the $0^{th}$ preset interval to the $m^{th}$ preset interval in the multiple preset intervals is used as the target size of the buffer zone.

In step 509, if a current size of the buffer zone is smaller than the target size of the buffer zone, and an effective length of the buffer zone is 0, then data is generated in the buffer zone to perform frame interpolation; and if the current size of the buffer zone is greater than the target size of the buffer zone, then non-speech data in the buffer zone is deleted, so that a difference between the current size of the buffer zone and the target size of the buffer zone is within a preset range.

It is provided that the target length of the buffer zone is 3 under a certain network condition and a given allowable packet loss rate, in case of network blockage, the effective length in the buffer zone will become 2; at this moment, frame interpolation is not needed; if blocked data packets arrive continuously, the effective length of the buffer zone will increase, and frame interpolation is not needed at this moment; and if the blocked data packets do not arrive continuously, the effective length of the buffer zone becomes 0, then the frame interpolation is needed.

It is provided that the network condition becomes poorer while the allowable packet loss rate keeps unchanged, the target length of the buffer zone will become longer, for instance, the target length becomes 5, which means that four frames of data can be played in the buffer zone yet during blockage; if the blocked data packets do not arrive continuously after the four frames of data are completely played, then the frame interpolation is needed. It follows that the lengthened target length of the buffer zone will reduce the probability of performing the frame interpolation of the buffer zone, so that the tone quality is improved.

It is provided that the network condition becomes better while the allowable packet loss rate keeps unchanged, the target length of the buffer zone will become smaller, for instance, the target length becomes 1, which means that the delay introduced in the buffer zone is one frame only, and the delay becomes short, but in case of network blockage, frame interpolation is needed after one frame of data is completely played.

It is provided that the network condition keeps unchanged while the allowable packet loss rate becomes larger, the target length of the buffer zone will become longer theoretically, which means that the delay increases, but the probability of performing the frame interpolation decreases, and this is the cost of a user for setting a larger allowable packet loss rate.

It is provided that the network condition keeps unchanged while the allowable packet loss rate becomes smaller, the target length of the buffer zone will become small theoretically, which means that the delay is decreased, but the probability of performing the frame interpolation is increased, which is because that the user accepts more packet loss frame interpolation in return for fewer delay.

In the embodiment, by adding one buffer zone between a decoder and a speech playing module of the receiving end, an RTP message receiving module of the receiving end transmits the received speech data packet (in particular, an RTP message) to the decoder, then the decoder decodes the RTP message to acquire speech data or non-speech data, and stores the speech data or non-speech data into the buffer zone, so as to process the network jitter through adjusting the buffer zone dynamically.

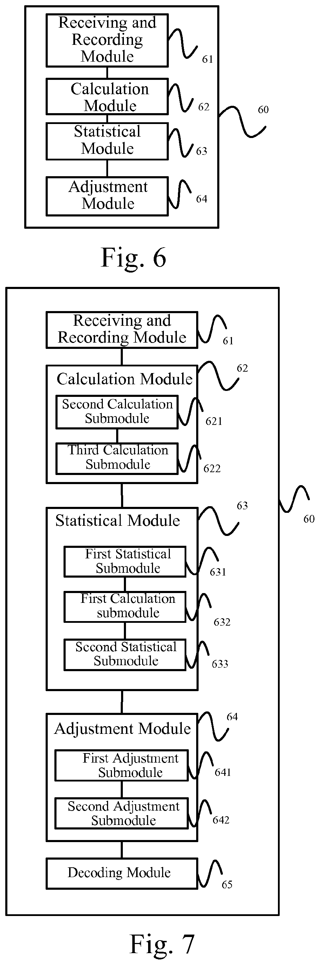

Fig. 6 is a block diagram showing a first embodiment of an apparatus for processing network jitter, according to an exemplary embodiment. As shown in Fig. 6, the apparatus includes a receiving and recording module 61, a calculation module 62, a statistical module 63 and an adjustment module 64.

The receiving and recording module 61 is configured to receive multiple speech data packets and record a receiving moment of each speech data packet.

The calculation module 62 is configured to calculate a time interval between receiving every two adjacent speech data packets in the multiple speech data packets according to the receiving moment.

The statistical module 63 is configured to perform a statistics on a probability distribution of the time intervals according to preset intervals to which respective time intervals belong.

The calculation module 62 is further configured to calculate a target size of a buffer zone according to the probability distribution and an allowable jitter probability.

The adjustment module 64 is configured to adjust the buffer zone according to the target size of the buffer zone to solve network jitter.

In the embodiment, because the probability distribution of the time intervals for a receiving end to receive the speech data packets changes with the network jitter, while the time interval of receiving the speech data packets by the receiving end is a random variable, the target size of the buffer zone is calculated through the probability distribution of the time interval and the allowable jitter probability in the embodiment; therefore, the target size of the buffer zone changes with the network jitter, and adjusting the buffer zone according to the target size of the buffer zone enables the size of the buffer zone to change with the network jitter; and since the size of the buffer zone is closely related to the ability of the buffer zone for overcoming the network jitter, the network jitter can be solved by adjusting the buffer zone according to the target size of the buffer zone.

Fig. 7 is a block diagram showing a second embodiment of an apparatus for processing network jitter, according to an exemplary embodiment. As shown in Fig. 7, on the basis of the embodiment as shown in Fig. 6, the $n^{th}$ time interval $J_n = R_n - R_{n-1}$, wherein $R_n$ represents the receiving moment of the $n^{th}$ speech data packet, $R_{n-1}$ represents the receiving moment of the $(n-1)^{th}$ speech data packet, $1 \leq n \leq (N-1)$, and $N$ represents a total number of the speech data packets; a number of the preset intervals is more than one, and the $i^{th}$ preset interval is $(\frac{(2i-1)T}{K}, \frac{(2i+1)T}{K}]$, wherein $T$ is a fixed time interval of sending the speech data packets by a sending end, and $K$ is a positive integer.

The statistical module 63 includes: a first statistical submodule 631, a first calculation submodule 632 and a second statistical submodule 633.

The first statistical submodule 631 is configured to perform a statistics on a number $N_i$, $i \geq 0$ of time intervals in all the time intervals that fall within each preset interval respectively, wherein $i$ represents an identification number of the preset interval, and $N_i \geq 0$.

The first calculation submodule 632 is configured to calculate a probability $p_i = \dfrac{N_i}{N}$ of the time interval falling within each preset interval according to each $N_i$ and the total number $N$ of the speech data packets.

The second statistical submodule 633 is configured to, when $N \geq N_{max}$, for any $n$, if $n \geq N_{max}$, subtract 1 from the number of the time intervals corresponding to the preset interval to which the $(n\text{-}N_{max}+1)^{th}$ time interval belongs, wherein $N_{max}$ is a threshold value of the total number of the speech data packets.

The calculation module 62 includes: a second calculation submodule 621 and a third calculation submodule 622.

The second calculation submodule 621 is configured to calculate $m$ that satisfies a condition $\sum\limits_{i=0}^{m} p_i < P < \sum\limits_{i=0}^{m+1} p_i$, wherein $P$ represents a known allowable jitter probability.

The third calculation submodule 622 is configured to calculate a sum of sizes of the preset intervals continuously from the $0^{th}$ preset interval to the $m^{th}$ preset interval in the multiple preset intervals, the sum being the target size of the buffer zone.

The adjustment module 64 includes: a first adjustment submodule 641 and a second adjustment submodule 642.

The first adjustment submodule 641 is configured to, if a current size of the buffer zone is smaller than the target size of the buffer zone, and an effective length of the buffer zone is 0, generate data in the buffer zone to perform frame interpolation.

The second adjustment submodule 642 is configured to, if the current size of the buffer zone is greater than the target size of the buffer zone, delete non-speech data in the buffer zone, so that a difference between the current size of the buffer zone and the target size of the buffer zone is within a preset range.

The apparatus further includes a decoding module 65 configured to, after the receiving and recording module 61 receives the multiple speech data packets and records the receiving moment of each speech data packet, decode each speech data packet in the multiple speech data packets to acquire speech data or non-speech data, and store the speech data or the non-speech data into the buffer zone.

The apparatus for processing network jitter provided by the embodiment may be configured to perform the technical solution of any method embodiment as shown in Fig. 2 to Fig. 5.

In the embodiment, the probability of the time intervals falling within each preset interval is derived by performing a statistics on the number of the time intervals in all the time intervals that fall within each preset interval respectively, and using the ratio of the number of the time intervals in each preset interval to the total number of the speech data packets as the probability of the time intervals falling within the preset interval, so that the probability distribution of the time intervals can be acquired; by removing one oldest time interval every time when a new time interval is added, the total number of the time intervals distributed in each preset interval is ensured to be unchanged with the increasing of the speech data packets received by the receiving end; the size of the buffer zone is dynamically adjusted with the network jitter by calculating the target size of the buffer zone according to the probability distribution of the time interval and the allowable jitter probability, and adjusting the current size of the buffer zone according to the target size of the buffer zone, so that the network jitter is solved; by adding one buffer zone between a decoder and a speech playing module of the receiving end, an RTP message receiving module of the receiving end transmits the received speech data packet (in particular, an RTP message) to the decoder, then the decoder decodes the RTP message to acquire speech data or non-speech data, and stores the speech data or non-speech data into the buffer zone, so as to process the network jitter through adjusting the buffer zone dynamically.

With respect to the apparatus for processing network jitter in the above embodiments, the specific manners for performing operations for individual modules therein have been described in detail in the embodiments regarding the methods, which will not be elaborated herein.

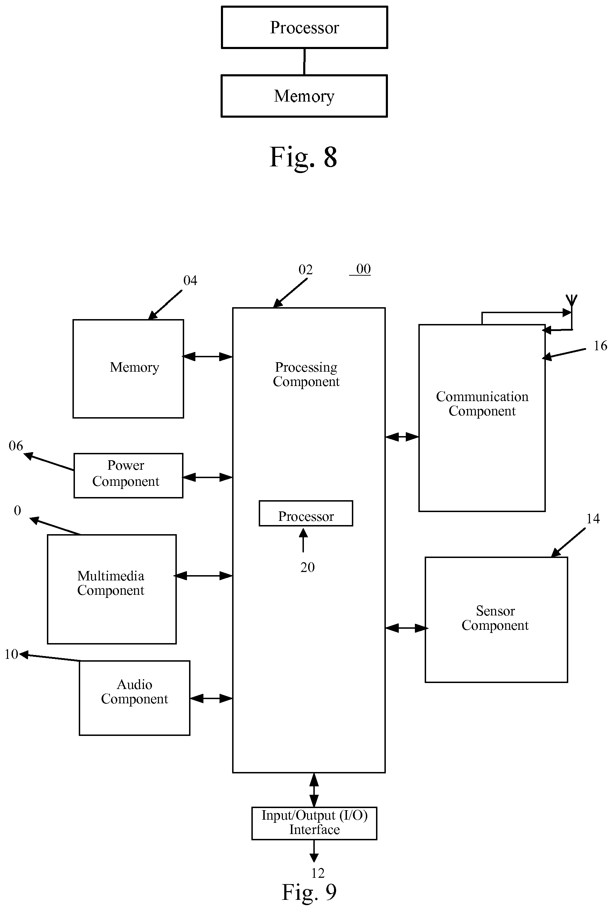

Internal functions and structures of the apparatus for processing network jitter are described above. As shown in Fig. 8, in practice, the apparatus for processing network jitter may be implemented as a terminal device, including:

a processor; and
a memory for storing instructions executable by the processor;
wherein the processor is configured to:
receive multiple speech data packets and record a receiving moment of each speech data packet;
calculate a time interval between receiving every two adjacent speech data packets in the multiple speech data packets according to the receiving moment;
perform a statistics on a probability distribution of the time intervals according to preset intervals to which respective time intervals belong;
calculate a target size of a buffer zone according to the probability distribution and an allowable jitter probability; and
adjust the buffer zone according to the target size of the buffer zone to solve network jitter.

In the embodiment, because the probability distribution of the time intervals for a receiving end to receive the speech data packets changes with the network jitter, while the time interval of receiving the speech data packets by the receiving end is a random variable, the target size of the buffer zone is calculated through the probability distribution of the time interval and the allowable jitter probability in the embodiment; therefore, the target size of the buffer zone changes with the network jitter, and adjusting the buffer zone according to the target size of the buffer zone enables the size of the buffer zone to change with the network jitter; and since the size of the buffer zone is closely related to the ability of the buffer zone for overcoming the network jitter, the network jitter can be solved by adjusting the buffer zone according to the target size of the buffer zone.

Fig. 9 is a block diagram showing another terminal device, according to an exemplary embodiment. For example, the terminal device 800 may be a mobile phone, a computer, a digital broadcast terminal, a messaging device, a gaming console, a tablet, a medical device, exercise equipment, a personal digital assistant, and the like.

Referring to Fig. 10, the terminal device 800 may include one or more of the following components: a processing component 802, a memory 804, a power component 806, a multimedia component 808, an audio component 810, an input/output (I/O) interface 812, a sensor component 814, and a communication component 816.

The processing component 802 typically controls overall operations of the terminal device 800, such as the operations associated with display, telephone calls, data communications, camera operations, and recording operations. The processing component 802 may include one or more processors 820 to execute instructions to perform all or part of the steps in the above described methods. Moreover, the processing component 802 may include one or more modules which facilitate the interaction between the processing component 802 and other components. For instance, the processing component 802 may include a multimedia module to facilitate the interaction between the multimedia component 808 and the processing component 802.

The memory 804 is configured to store various types of data to support the operation of the device 800. Examples of such data include instructions for any applications or methods operated on the terminal device 800, contact data, phonebook data, messages, pictures, video, etc. The memory 804 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 806 provides power to various components of the terminal device 800. The power component 806 may include a power management system, one or more power sources, and any other components associated with the generation, management, and distribution of power in the terminal device 800.

The multimedia component 808 includes a screen providing an output interface between the terminal device 800 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action. In some embodiments, the multimedia component 808 includes a front camera and/or a rear camera. The front camera and/or the rear camera may receive an external multimedia datum while the device 800 is in an operation mode, such as a photographing mode or a video mode. Each of the front camera and the rear camera may be a fixed optical lens system or have focus and optical zoom capability.

The audio component 810 is configured to output and/or input audio signals. For example, the audio component 810 includes a microphone ("MIC") configured to receive an external audio signal when the terminal device 800 is in an operation mode, such as a call mode, a recording mode, and a voice recognition mode. The received audio signal may be further stored in the memory 804 or transmitted via the communication component 816. In some embodiments, the audio component 810 further includes a speaker to output audio signals.

The I/O interface 812 provides an interface between the processing component 802 and peripheral interface modules, such as a keyboard, a click wheel, buttons, and the like. The buttons may include, but are not limited to, a home button, a volume button, a starting button, and a locking button.

The sensor component 814 includes one or more sensors to provide status assessments of various aspects of the terminal device 800. For instance, the sensor component 814 may detect an open/closed status of the device 800, relative positioning of components, e.g., the display and the keypad, of the terminal device 800, a change in position of the terminal 800 or a component of the terminal device 800, a presence or absence of user contact with the terminal device 800, an orientation or an acceleration/deceleration of the terminal device 800, and a change in temperature of the terminal device 800. The sensor component 814 may include a proximity sensor configured to detect the presence of nearby objects without any physical contact. The sensor component 814 may also include a light sensor, such as a CMOS or CCD image sensor, for use in imaging applications. In some embodiments, the sensor component 814 may also include an accelerometer sensor, a gyroscope sensor, a magnetic sensor, a pressure sensor, or a temperature sensor.

The communication component 816 is configured to facilitate communication, wired or wirelessly, between the terminal device 800 and other devices. The terminal device 800 can access a wireless network based on a communication standard, such as WiFi, 2G, or 3G, or a combination thereof. In one exemplary embodiment, the communication component 816 receives a broadcast signal or broadcast associated information from an external broadcast management system via a broadcast channel. In one exemplary embodiment, the communication component 816 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In exemplary embodiments, the terminal device 800 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above described methods.

In exemplary embodiments, there is also provided a non-transitory computer-readable storage medium including instructions, such as included in the memory 804, executable by the processor 820 in the terminal device 800, for performing the above-described methods. For example, the non-transitory computer-readable storage medium may be a ROM, a RAM, a CD-ROM, a magnetic tape, a floppy disc, an optical data storage device, and the like.

## Claims

1. A method for processing network jitter, comprising:

   receiving multiple speech data packets and recording a receiving moment of each speech data packet (101, 201, 301, 401, 501);
   calculating (102, 202, 302, 402, 503) a time interval between receiving every two adjacent speech data packets in the multiple speech data packets according to the receiving moment;
   performing (103) a statistics on a probability distribution of the time intervals according to preset intervals to which respective time intervals belong;
   calculating (104, 205, 306) a target size of a buffer zone according to the probability distribution and an allowable jitter probability; and
   adjusting (105, 206, 307) the buffer zone according to the target size of the buffer zone to achieve the allowable jitter probability,
   **characterized in that**
   the $n^{\text{th}}$ time interval $J_n = R_n - R_{n-1}$, $R_n$ represents the receiving moment of the $n^{\text{th}}$ speech data packet, $R_{n-1}$ represents the receiving moment of the $(n\text{-}1)^{\text{th}}$ speech data packet, $1 \le n \le (N-1)$, and $N$ represents a total number of the speech data packets;
   a number of the preset intervals is more than one, and the $i^{\text{th}}$ preset interval is $(\dfrac{(2i-1)T}{K}, \dfrac{(2i+1)T}{K}]$, wherein $T$ is a fixed time interval of sending the speech data packets by a sending end, and K is a positive integer; and
   the performing (103) the statistics on the probability distribution of the time intervals according to the preset intervals to which respective time intervals belong comprises:

   performing (303, 403, 504) a statistics on a number $N_i$, $i \ge 0$ of time intervals that fall within each preset interval respectively among all the time intervals, wherein $i$ represents an identification number of the preset interval, and $N_i \ge 0$ ; and
   calculating (304, 404, 505) a probability $p_i = \dfrac{N_i}{N}$ of the time interval that falls within each preset interval according to each $N_i$ and the total number $N$ of the speech data packets.

2. The method according to claim 1, wherein when $N \ge N_{\text{max}}$, for any $n$, if $n \ge N_{\text{max}}$, then 1 is subtracted from the number of the time intervals corresponding to the preset interval to which the $(n\text{-}N_{\text{max}}+1)^{\text{th}}$ time interval belongs, wherein $N_{\text{max}}$ is a threshold value of the total number of the speech data packets (305, 405, 506).

3. The method according to claim 2, wherein the calculating (104, 205, 306) the target size of the buffer zone according to the probability distribution and the allowable jitter probability comprises:

   calculating (406, 507) $m$ that satisfies a condition $\displaystyle\sum_{i=0}^{m} p_i < P < \sum_{i=0}^{m+1} p_i$ , wherein $P$ represents a known allowable jitter probability; and

using (407, 508) a sum of sizes of the preset intervals continuously from the 0th preset interval to the $m$th preset interval in the multiple preset intervals as the target size of the buffer zone.

4. The method according to any one of claims 1 to 3, wherein the adjusting (105, 206, 307) the buffer zone according to the target size of the buffer zone to solve network jitter comprises:

if a current size of the buffer zone is smaller than the target size of the buffer zone, and an effective length of the buffer zone is 0, generating data in the buffer zone to perform frame interpolation; and

if the current size of the buffer zone is greater than the target size of the buffer zone, deleting non-speech data from the buffer zone, so that a difference between the current size of the buffer zone and the target size of the buffer zone is within a preset range (408, 509).

5. The method according to claim 4, wherein after receiving the multiple speech data packets and recording the receiving moment of each speech data packet (101, 201, 301, 401, 501), the method further comprises:

decoding each speech data packet in the multiple speech data packets to acquire speech data or non-speech data, and storing the speech data or the non-speech data into the buffer zone (502).

6. An apparatus for processing network jitter, comprising:

a receiving and recording module (61) configured to receive multiple speech data packets and record a receiving moment of each speech data packet,

a calculation module (62) configured to calculate a time interval between receiving every two adjacent speech data packets in the multiple speech data packets according to the receiving moment;

a statistical module (63) configured to perform a statistics on a probability distribution of the time intervals according to preset intervals to which respective time intervals belong;

the calculation module (62) being further configured to calculate a target size of a buffer zone according to the probability distribution and an allowable jitter probability; and

an adjustment module (64) configured to adjust the buffer zone according to the target size of the buffer zone to achieve the allowable jitter probability,

**characterized in that**

the $n$th time interval $J_n = R_n - R_{n-1}$, $R_n$ represents

the receiving moment of the $n$th speech data packet, $R_{n-1}$ represents the receiving moment of the $(n-1)$th speech data packet, $1 \le n \le (N\text{-}1)$, and $N$ represents a total number of the speech data packets;

a number of the preset intervals is more than one, and the $i$th preset interval is

$$(\frac{(2i-1)T}{K}, \frac{(2i+1)T}{K}],$$ wherein $T$ is a fixed time interval of sending the speech data packets by a sending end, and $K$ is a positive integer; and the statistical module (63) comprises:

a first statistical submodule (631) configured to perform a statistics on a number $N_i$, $i \ge 0$ of time intervals that fall within each preset interval respectively among all the time intervals, wherein $i$ represents an identification number of the preset interval, and $N_i \ge 0$ ; and

a first calculation submodule (632) configured to calculate a probability $p_i = \dfrac{N_i}{N}$ of the time interval that falls within each preset interval according to each $N_i$ and the total number $N$ of the speech data packets.

7. The apparatus according to claim 6, wherein the statistical module (63) further comprises:
a second statistical submodule (633) configured to, when $N \ge N_{max}$, for any $n$, if $n \ge N_{max}$, subtract 1 from the number of the time intervals corresponding to the preset interval to which the $(n - N_{max} + 1)$th time interval belongs, wherein $N_{max}$ is a threshold value of the total number of the speech data packets.

8. The apparatus according to claim 7, wherein the calculation module (62) comprises:

a second calculation submodule (621) configured to calculate $m$ that satisfies a condition

$$\sum_{i=0}^{m} p_i < P < \sum_{i=0}^{m+1} p_i,$$ wherein $P$ represents a known allowable jitter probability; and
a third calculation submodule (622) configured to calculate a sum of sizes of preset intervals continuously from the 0th preset interval to the $m$th preset interval in the multiple preset intervals, the sum being the target size of the buffer zone.

9. The apparatus according to any one of claims 6 to 8, wherein the adjustment module (64) comprises:

a first adjustment submodule (641) configured to, if a current size of the buffer zone is smaller than the target size of the buffer zone, and an effective length of the buffer zone is 0, generate data in the buffer zone to perform frame interpolation; and

a second adjustment submodule (642) configured to, if the current size of the buffer zone is greater than the target size of the buffer zone, delete non-speech data in the buffer zone, so that a difference between the current size of the buffer zone and the target size of the buffer zone is within a preset range.

10. The apparatus according to claim 9, further comprising:

a decoding module (65) configured to, after the receiving and recording module (62) receives the multiple speech data packets and records the receiving moment of each speech data packet, decode each speech data packet in the multiple speech data packets to acquire speech data or non-speech data, and store the speech data or the non-speech data into the buffer zone.

11. A computer program, which when executing on a processor of a terminal device, performs a method according to any one of claims 1 to 5.

**Patentansprüche**

1. Verfahren zum Verarbeiten von Netzwerk-Jitter mit den folgenden Schritten:

Empfangen mehrerer Sprachdatenpakete und Aufzeichnen eines Empfangszeitpunkts jedes Sprachdatenpakets (101, 201, 301, 401, 501); Berechnen (102, 202, 302, 402, 503) eines Zeitintervalls zwischen dem Empfang jeweils zweier benachbarter Sprachdatenpakete in den mehreren Sprachdatenpakete entsprechend dem Empfangszeitpunkt; Durchführen (103) einer Statistik an einer Wahrscheinlichkeitsverteilung der Zeitintervalle entsprechend voreingestellter Intervalle, zu denen jeweilige Zeitintervalle gehören; Berechnen (104, 205, 306) einer Sollgröße einer Pufferzone entsprechend der Wahrscheinlichkeitsverteilung und einer zulässigen Jitter-Wahrscheinlichkeit; und Anpassen (105, 206, 307) der Pufferzone entsprechend der Sollgröße der Pufferzone, um die zulässige Jitter-Wahrscheinlichkeit zu erreichen, **dadurch gekennzeichnet, dass** der n-te Zeitintervall $J_n = R_n - R_{n-1}$, $R_n$ den Empfangszeitpunkt des n-ten Sprachdatenpakets angibt, $R_{n-1}$ den Empfangszeitpunkt des (n-

1)-ten Sprachdatenpakets angibt, $1 \leq n \leq (N-1)$, und $N$ die Gesamtzahl der Sprachdatenpakete angibt;

die Anzahl der voreingestellten Intervalle größer als eins ist, und der i-te voreingestellte Intervall

$$\left( \frac{(2i-1)T}{K}, \frac{(2i+1)T}{K} \right] \text{ ist, wobei } T \text{ ein fester}$$

Zeitintervall des Sendens der Sprachdatenpakete durch eine Senderseite ist, und K eine positive ganze Zahl ist; und

das Durchführen (103) der Statistik an der Wahrscheinlichkeitsverteilung der Zeitintervalle entsprechend voreingestellter Intervalle, zu denen jeweilige Zeitintervalle gehören, aufweist:

Durchführen (303, 403, 504) einer Statistik an einer Anzahl $N_i$, $i \geq 0$ von Zeitintervallen, die jeweils in jeden voreingestellten Zeitintervall unter sämtlichen Zeitintervallen fallen, wobei $i$ eine Identifikationsnummer des voreingestellten Intervalls angibt, und $N_i \geq 0$; und

Berechnen (304, 404, 505) einer Wahrscheinlichkeit $p_i = \dfrac{N_i}{N}$ des Zeitintervalls, der in jeden voreingestellten Intervall fällt, entsprechend jedem $N_i$ und der Gesamtzahl $N$ der Sprachdatenpakete.

2. Verfahren nach Anspruch 1, bei welchem, wenn $N \geq N_{max}$, für jedes n, falls $n \geq N_{max}$, 1 von der Anzahl der Zeitintervalle subtrahiert wird, welche dem voreigestellten Intervall entsprechen, zu welchem der $(n-N_{max}+1)$-te Zeitintervall gehört, wobei $N_{max}$ ein Schwellenwert der Gesamtanzahl der Sprachdatenpakete (305, 405, 506) ist.

3. Verfahren nach Anspruch 2, bei welchem das Berechnen (104, 205, 306) der Zielgröße der Pufferzone entsprechend der Wahrscheinlichkeitsverteilung und der zulässigen Jitter-Wahrscheinlichkeit aufweist:

das Berechnen (406, 507) von $m$, welches eine Bedingung $\sum_{i=0}^{m} p_i < P < \sum_{i=0}^{m+1} p_i$ erfüllt, wobei P

eine bekannte zulässige Jitter-Wahrscheinlichkeit angibt; und

das Verwenden (407, 508) einer kontinuierlichen Summe der Größen der voreingestellten Zeitintervalle von dem 0-ten voreingestellten Intervall bis zum m-ten voreingestellten Intervall unter den mehreren voreingestellten Intervallen als die Sollgröße der Pufferzone.

**4.** Verfahren nach einem der Ansprüche 1 bis 3, bei welchem das Anpassen (105, 206, 307) der Pufferzone entsprechend der Sollgröße der Pufferzone zur Behebung von Netzwerk-Jitter aufweist:

wenn eine aktuelle Größe der Pufferzone kleiner als die Sollgröße der Pufferzone ist und eine effektive Länge der Pufferzone 0 ist, das Erzeugen von Daten in der Pufferzone zur Durchführung einer Frame-Interpolation; und
wenn die aktuelle Größe der Pufferzone größer als die Sollgröße der Pufferzone ist, das Löschen von Nicht-Sprachdaten aus der Pufferzone, so dass eine Differenz zwischen der aktuellen Größe der Pufferzone und der Sollgröße der Pufferzone innerhalb eines voreingestellten Bereichs (408, 509) liegt.

**5.** Verfahren nach Anspruch 4, bei welchem das Verfahren nach dem Empfang der mehreren Sprachdatenpakete und dem Aufzeichnen des Empfangszeitpunkts jedes Sprachdatenpakets (101, 201, 301, 401, 501), ferner aufweist:
das Decodieren jedes Sprachdatenpakets unter den mehreren Sprachdatenpaketen, um Sprachdaten oder Nicht-Sprachdaten zu erfassen, und das Speichern der Sprachdaten oder der Nicht-Sprachdaten in die Pufferzone (502).

**6.** Vorrichtung zum Verarbeiten von Netzwerk-Jitter, mit:

einem Empfangs- und Aufzeichnungsmodul (61), das zum Empfangen mehrerer Sprachdatenpakete und zum Aufzeichnen eines Empfangszeitpunkts jedes Sprachdatenpakets ausgebildet ist;
einem Berechnungsmodul (62), das zum Berechnen eines Zeitintervalls zwischen dem Empfang jeweils zweier benachbarter Sprachdatenpakete in den mehreren Sprachdatenpakete entsprechend dem Empfangszeitpunkt ausgebildet ist;
einem Statistikmodul (63), das zum Durchführen einer Statistik an einer Wahrscheinlichkeitsverteilung der Zeitintervalle entsprechend voreingestellter Intervalle, zu denen jeweilige Zeitintervalle gehören, ausgebildet ist;
wobei das Berechnungsmodul (62) ferner zum Berechnen einer Sollgröße einer Pufferzone entsprechend der Wahrscheinlichkeitsverteilung und einer zulässigen Jitter-Wahrscheinlichkeit ausgebildet ist; und
einem Anpassungsmodul (64), das dazu ausgebildet ist, die Pufferzone entsprechend der Sollgröße der Pufferzone anzupassen, um die zulässige Jitter-Wahrscheinlichkeit zu erreichen,

**dadurch gekennzeichnet, dass**
der n-te Zeitintervall $J_n = R_n - R_{n-1}$, $R_n$ den Empfangszeitpunkt des n-ten Sprachdatenpakets angibt, $R_{n-1}$ den Empfangszeitpunkt des $(n-1)$-ten Sprachdatenpakets angibt, $1 \leq n \leq (N\text{-}1)$, und $N$ die Gesamtzahl der Sprachdatenpakete angibt;
die Anzahl der voreingestellten Intervalle größer als eins ist, und der i-te voreingestellte Intervall

$(\dfrac{(2i-1)T}{K}, \dfrac{(2i+1)T}{K}]$ ist, wobei $T$ ein fester Zeitintervall des Sendens der Sprachdatenpakete durch eine Senderseite ist, und $K$ eine positive ganze Zahl ist; und
das Statistikmodul (63) aufweist:

ein erstes Statistiksubmodul (631), das zum Durchführen einer Statistik an einer Anzahl $N_i$, $i \geq 0$ von Zeitintervallen, die jeweils in jeden voreingestellten Zeitintervall unter sämtlichen Zeitintervallen fallen, ausgebildet ist, wobei $i$ eine Identifikationsnummer des voreingestellten Intervalls angibt, und $N_i \geq 0$; und
ein erstes Berechnungssubmodul (632), das dazu ausgebildet ist, eine Wahrschein-

lichkeit $p_i = \dfrac{N_i}{N}$ des Zeitintervalls, der in jeden voreingestellten Intervall fällt, entsprechend jedem $N_i$ und der Gesamtzahl $N$ der Sprachdatenpakete zu berechnen.

**7.** Vorrichtung nach Anspruch 6, bei welcher das Statistikmodul (63) ferner aufweist:
ein zweites Statistiksubmodul (633), das dazu ausgebildet ist, wenn $N \geq N_{max}$, für jedes n, falls $n \geq N_{max}$, 1 von der Anzahl der Zeitintervalle zu subtrahieren, welche dem voreigestellten Intervall entsprechen, zu welchem der $(n - N_{max} + 1)$-te Zeitintervall gehört, wobei $N_{max}$ ein Schwellenwert der Gesamtanzahl der Sprachdatenpakete ist.

**8.** Vorrichtung nach Anspruch 7, bei welcher das Berechnungsmodul (62) aufweist:

ein zweites Berechnungssubmodul (621), das zum Berechnen von $m$ ausgebildet ist, welches

eine Bedingung $\sum\limits_{i=0}^{m} p_i < P < \sum\limits_{i=0}^{m+1} p_i$ erfüllt, wobei $P$ eine bekannte zulässige Jitter-Wahrscheinlichkeit angibt; und
ein drittes Berechnungssubmodul (622), das zum kontinuierlichen Berechnen einer Summe der Größen der voreingestellten Zeitintervalle von dem 0-ten voreingestellten Intervall bis zum m-ten voreingestellten Intervall unter den mehreren voreingestellten Intervallen ausgebildet ist, wobei die Summe die Sollgröße der Pufferzone ist.

9. Vorrichtung nach einem der Ansprüche 6 bis 8, bei welcher das Anpassungsmodul (64) aufweist:

ein erstes Anpassungssubmodul (641), das dazu ausgebildet ist, wenn eine aktuelle Größe der Pufferzone kleiner als die Sollgröße der Pufferzone ist und eine effektive Länge der Pufferzone 0 ist, Daten in der Pufferzone zur Durchführung einer Frame-Interpolation zu erzeugen; und
ein zweites Anpassungssubmodul (642), das dazu ausgebildet ist, wenn die aktuelle Größe der Pufferzone größer als die Sollgröße der Pufferzone ist, Nicht-Sprachdaten aus der Pufferzone zu löschen, so dass eine Differenz zwischen der aktuellen Größe der Pufferzone und der Sollgröße der Pufferzone innerhalb eines voreingestellten Bereichs liegt.

10. Vorrichtung nach Anspruch 9, ferner mit:
einem Decodiermodul (65), das dazu ausgebildet ist, nachdem das Empfangs-und Aufzeichnungsmodul (62) die mehreren Sprachdatenpakete empfange hat und den Empfangszeitpunkts jedes Sprachdatenpakets aufgezeichnet hat, jedes Sprachdatenpaket unter den mehreren Sprachdatenpaketen zu decodieren, um Sprachdaten oder Nicht-Sprachdaten zu erfassen, und die Sprachdaten oder der Nicht-Sprachdaten in die Pufferzone zu speichern.

11. Computerprogramm, welches bei Ausführung auf einem Prozessor eines Endgeräts ein Verfahren nach einem der Ansprüche 1 bis 5 ausführt.


**Revendications**

1. Procédé de traitement de gigue de réseau, comprenant le fait de:

recevoir de multiples paquets de données vocales et enregistrer un moment de réception de chaque paquet de données vocales (101, 201, 301, 401, 501);
calculer (102, 202, 302, 402, 503) un intervalle de temps entre la réception de chaque fois deux paquets de données vocales adjacents dans les multiples paquets de données vocales selon le moment de réception;
réaliser (103) une statistique sur une distribution de probabilité des intervalles de temps selon les intervalles préréglés auxquels appartiennent les intervalles de temps respectifs;

calculer (104, 205, 306) une grandeur cible d'une zone tampon selon la distribution de probabilité et une probabilité de gigue admissible; et
ajuster (105, 206, 307) la zone tampon selon la grandeur cible de la zone tampon pour obtenir la probabilité de gigue admissible,
**caractérisé par le fait que**
le $n$-ième intervalle de temps $J_n = R_n - R_{n-1}$, $R_n$ représente le moment de réception du $n$-ième paquet de données vocales, $R_{n-1}$ représente le moment de réception du $(n$-1)-ème paquet de données vocales, $1 \leq n \leq (N$ - 1), et $N$ représente un nombre total de paquets de données vocales;
un nombre d'intervalles préréglés est supérieur à un, et le $i$-ème intervalle préréglé est $(\frac{(2i-1)T}{K}, \frac{(2i+1)T}{K}]$, où $T$ est un intervalle de temps fixe d'envoi des paquets de données vocales par une extrémité d'envoi, et $K$ est un nombre entier positif; et
la réalisation (103) de la statistique sur la distribution de probabilité des intervalles de temps selon les intervalles préréglés auxquels appartiennent les intervalles de temps respectifs comprend le fait de:

réaliser (303, 403, 504) une statistique sur un nombre $N_i$, $i \geq 0$ d'intervalles de temps qui tombent dans chaque intervalle préréglé respectivement parmi tous les intervalles de temps, où $i$ représente un numéro d'identification de l'intervalle préréglé, et $N_i \geq 0$; et
calculer (304, 404, 505) une probabilité $p_i = \frac{N_i}{N}$ de l'intervalle de temps qui tombe dans chaque intervalle préréglé selon chaque $N_i$ et le nombre total $N$ des paquets de données vocales.

2. Procédé selon la revendication 1, dans lequel, lorsque $N \geq N_{max}$, pour tout $n$, si $n \geq N_{max}$, 1 est ensuite soustrait du nombre des intervalles de temps correspondant à l'intervalle préréglé auquel appartient le $(n$ - $N_{max}$ + 1)-ième intervalle de temps, où $N_{max}$ est une valeur de seuil du nombre total des paquets de données vocales (305, 405, 506).

3. Procédé selon la revendication 2, dans lequel le calcul (104, 205, 306) de la grandeur cible de la zone tampon selon la distribution de probabilité et la probabilité de gigue admissible comprend le fait de:

calculer (406, 507) $m$ qui remplit une condition

$$\sum_{i=0}^{m} p_i < P < \sum_{i=0}^{m+1} p_i,$$

où P représente une probabilité de gigue admissible connue; et

utiliser (407, 508) une somme des grandeurs des intervalles préréglés de manière continue du 0-ème intervalle préréglé au m-ème intervalle préréglé dans les multiples intervalles préréglés comme grandeur cible de la zone tampon.

4. Procédé selon l'une quelconque des revendications 1 à 3, dans lequel le réglage (105, 206, 307) de la zone tampon selon la grandeur cible de la zone tampon pour résoudre la gigue de réseau comprend le fait de:

si une grandeur actuelle de la zone tampon est inférieure à la grandeur cible de la zone tampon et qu'une longueur effective de la zone tampon est égale à 0, générer des données dans la zone tampon pour effectuer une interpolation de trame; et

si la grandeur actuelle de la zone tampon est supérieure à la grandeur cible de la zone tampon, supprimer les données non vocales de la zone tampon, de sorte qu'une différence entre la grandeur actuelle de la zone tampon et la grandeur cible de la zone tampon se situe dans une plage préréglée (408, 509).

5. Procédé selon la revendication 4, dans lequel, après avoir reçu les multiples paquets de données vocales et enregistré le moment de réception de chaque paquet de données vocales (101, 201, 301, 401, 501), le procédé comprend par ailleurs le fait de:

décoder chaque paquet de données vocales dans les multiples paquets de données vocales pour acquérir les données vocales ou les données non vocales, et mémoriser les données vocales ou les données non vocales dans la zone tampon (502).

6. Appareil de traitement de gigue de réseau, comprenant:

un module de réception et d'enregistrement (61) configuré pour recevoir de multiples paquets de données vocales et enregistrer un moment de réception de chaque paquet de données vocales,

un module de calcul (62) configuré pour calculer un intervalle de temps entre la réception de chaque fois deux paquets de données vocales adjacents dans les multiples paquets de données vocales selon le moment de réception;

un module statistique (63) configuré pour effectuer une statistique sur une distribution de probabilité des intervalles de temps selon les intervalles préréglés auxquels appartiennent les intervalles de temps respectifs;

le module de calcul (62) étant par ailleurs configuré pour calculer une grandeur cible d'une zone tampon selon la distribution de probabilité et une probabilité de gigue admissible; et

un module de réglage (64) configuré pour régler la zone tampon selon la grandeur cible de la zone tampon pour obtenir la probabilité de gigue admissible,

**caractérisé par le fait que**

le $n$-ième intervalle de temps $J_n = R_n - R_{n-1}$, $R_n$ représente le moment de réception du n-ième paquet de données vocales, $R_{n-1}$ représente le moment de réception du ($n$-1)-ème paquet de données vocales, $1 \le n \le (N - 1)$, et $N$ représente un nombre total de paquets de données vocales; un nombre des intervalles préréglés est supérieur à un, et le $i$-ème intervalle préréglé est

$(\frac{(2i-1)T}{K}, \frac{(2i+1)T}{K}]$, où $T$ est un intervalle de temps fixe d'envoi des paquets de données vocales par une extrémité d'envoi, et $K$ est un nombre entier positif; et

le module statistique (63) comprend:

un premier sous-module statistique (631) configuré pour réaliser une statistique sur un nombre $N_i$, $i \ge 0$ d'intervalles de temps qui tombent dans chaque intervalle préréglé respectivement parmi tous les intervalles de temps, où $i$ représente un numéro d'identification de l'intervalle préréglé, et $N_i \ge 0$; et un premier sous-module de calcul (632) configuré pour calculer une probabilité

$p_i = \frac{N_i}{N}$ de l'intervalle de temps qui tombe dans chaque intervalle préréglé selon chaque $N_i$ et le nombre total $N$ des paquets de données vocales.

7. Appareil selon la revendication 6, dans lequel le module statistique (63) comprend par ailleurs:
un deuxième sous-module statistique (633) configuré pour soustraire, lorsque $N \ge N_{max}$, pour tout $n$, si $n \ge N_{max}$, 1 du nombre des intervalles de temps correspondant à l'intervalle préréglé auquel appartient le (n-$N_{max}$ + 1)-ème intervalle de temps, où $N_{max}$ est une valeur de seuil du nombre total de paquets de données vocales.

8. Appareil selon la revendication 7, dans lequel le module de calcul (62) comprend:

un deuxième sous-module de calcul (621) configuré pour calculer *m* qui remplit une condition

$$\sum_{i=0}^{m} p_i < P < \sum_{i=0}^{m+1} p_i,$$

où *P* représente une probabilité de gigue admissible connue; et

un troisième sous-module de calcul (622) configuré pour calculer une somme de grandeurs d'intervalles préréglés de manière continue du 0-ème intervalle préréglé au *m*-ème intervalle préréglé dans les multiples intervalles préréglés, la somme étant la grandeur cible de la zone tampon.

9. Appareil selon l'une quelconque des revendications 6 à 8, dans lequel le module de réglage (64) comprend:

   un premier sous-module de réglage (641) configuré pour générer, si une grandeur actuelle de la zone tampon est plus petite que la grandeur cible de la zone tampon et qu'une longueur effective de la zone tampon est égale à 0, des données dans la zone tampon pour effectuer une interpolation de trame; et
   un deuxième sous-module de réglage (642) configuré pour supprimer, si la grandeur actuelle de la zone tampon est plus grande que la grandeur cible de la zone tampon, les données non vocales dans la zone tampon, de sorte qu'une différence entre la grandeur actuelle de la zone tampon cible et la grandeur cible de la zone tampon se situe dans une plage préréglée.

10. Appareil selon la revendication 9, comprenant par ailleurs:
    un module de décodage (65) configuré pour décoder, après que le module de réception et d'enregistrement (62) ait reçu les multiples paquets de données vocales et enregistré le moment de réception de chaque paquet de données vocales, chaque paquet de données vocales dans les multiples paquets de données vocales pour acquérir les données vocales ou les données non vocales, et mémoriser les données vocales ou les données non vocales dans la zone tampon.

11. Programme d'ordinateur qui, lorsqu'il est exécuté sur un processeur d'un dispositif terminal, réalise un procédé selon l'une quelconque des revendications 1 à 5.

Receive multiple speech data packets and record a receiving moment of each speech data packet — 101

Calculate a time interval between receiving every two adjacent speech data packets in the multiple speech data packets according to the receiving moment — 102

Perform a statistics on a probability distribution of the time intervals according to the preset intervals to which respective time intervals belong — 103

Calculate a target size of a buffer zone according to the probability distribution and an allowable jitter probability — 104

Adjust the buffer zone according to the target size of the buffer zone to solve network jitter. — 105

## Fig. 1A

RTP Message Receiving Module

Decoder

Buffer Zone

Speech Playing Module

## Fig. 1B

Receive multiple speech data packets and record a receiving moment of each speech data packet  〜 201

Calculate a time interval between receiving every two adjacent speech data packets in the multiple speech data packets according to the receiving moment  〜 202

Perform a statistics on a number of the time intervals in all the time intervals that fall within each preset interval respectively  〜 203

Calculate a probability of the time intervals falling within each preset interval according to each number and a total number of the speech data packets  〜 204

Calculate a target size of a buffer zone according to the probability distribution and an allowable jitter probability  〜 205

Adjust the buffer zone according to the target size of the buffer zone to solve network jitter  〜 206

Fig. 2

Receive multiple speech data packets and record a
receiving moment of each speech data packet
301

Calculate a time interval between receiving every two
adjacent speech data packets in the multiple speech data
packets according to the receiving moment
302

Perform a statistic on a number $Ni, i \geq 0$ of the time
intervals in all the time intervals that fall within each preset
interval respectively
303

Calculate a probability distribution of the time intervals
according to the preset interval to which each time interval
belongs
304

When $N \geq N_{max}$, for any $n$, if $n \geq N_{max}$, subtract 1 from the
number of the time intervals corresponding to the preset
interval to which the $(n - N_{max} + 1)^{th}$ time interval belongs,
wherein $N_{max}$ is a threshold value of the total number of the
speech data packets
305

Calculate a target size of a buffer zone according to the
probability distribution and an allowable jitter probability
306

Adjust the buffer zone according to the target size of the
buffer zone to solve network jitter
307

# Fig. 3

Receive multiple speech data packets and record a receiving moment of each speech data packet — 401

Calculate a time interval between receiving every two adjacent speech data packets in the multiple speech data packets according to the receiving moment — 402

Perform a statistics on a number $N_i, i \geq 0$ of the time intervals in all the time intervals that fall within each preset interval respectively — 403

Calculate a probability distribution of the time intervals according to the preset intervals to which respective time intervals belong — 404

When $N \geq N_{max}$, for any $n$, if $n \geq N_{max}$, subtract 1 from the number of the time intervals corresponding to the preset interval to which the $(n - N_{max} + 1)^{th}$ time interval belongs, wherein $N_{max}$ is a threshold value of the total number of the speech data packets — 405

Calculate m that satisfies a condition $\sum_{i=0}^{m} p_i < P < \sum_{i=0}^{m+1} p_i$, wherein $P$ represents a known allowable jitter probability — 406

Use a sum of sizes of preset intervals continuously from the $0^{th}$ preset interval to the $m^{th}$ preset interval in the multiple preset intervals as the target size of the buffer zone — 407

If a current size of the buffer zone is smaller than the target size of the buffer zone, generate data in the buffer zone to perform frame interpolation; and if the current size of the buffer zone is greater than the target size of the buffer zone, delete non-speech data in the buffer zone, so that a difference between the current size of the buffer zone and the target size of the buffer zone is within a preset range — 408

Fig. 4

Receive multiple speech data packets and record a receiving moment of each speech data packet — 501

Decode each speech data packet in the multiple speech data packets to acquire speech data or non-speech data, and store the speech data or the non-speech data in a buffer zone — 502

Calculate a time interval between receiving every two adjacent speech data packets in the multiple speech data packets according to the receiving moment — 503

Perform a statistics on a number $N_i, i \geq 0$ of the time intervals in all the time intervals that fall within each preset interval respectively — 504

Calculate a probability $p_i = \dfrac{N_i}{N}$ of the time intervals falling within each preset interval according to each $N_i$ and a total number $N$ of the speech data packets — 505

When $N \geq N_{max}$, for any $n$, if $n \geq N_{max}$, subtract 1 from the number of the time intervals corresponding to the preset interval to which the $(n - N_{max} + 1)^{th}$ time interval belongs, wherein $N_{max}$ is a threshold value of the total number of the speech data packets — 506

Calculate $m$ that satisfies a condition $\sum_{i=0}^{m} p_i < P < \sum_{i=0}^{m+1} p_i$, wherein $P$ represents a known allowable jitter probability — 507

Use a sum of sizes of preset intervals continuously from the $0^{th}$ preset interval to the $m^{th}$ preset interval in the multiple preset intervals as the target size of the buffer zone — 508

If a current size of the buffer zone is smaller than the target size of the buffer zone, generate data in the buffer zone to perform frame interpolation; and if the current size of the buffer zone is greater than the target size of the buffer zone, delete non-speech data in the buffer zone, so that a difference between the current size of the buffer zone and the target size of the buffer zone is within a preset range — 509

Fig. 5

Fig. 6

Fig. 7

Processor

Memory

Fig. 8

Fig. 9

**REFERENCES CITED IN THE DESCRIPTION**

**Patent documents cited in the description**

- WO 2014100331 A
- WO 0133787 A
- WO 2015160617 A
- CN 103685070
- US 20090003369 A